# EUROPÄISCHE PATENTSCHRIFT

(11) **EP 1 367 339 B1**
(45) Veröffentlichungstag und Bekanntmachung des Hinweises auf die Patenterteilung: **19.12.2007**
(21) Anmeldenummer: 03005192.4
(22) Anmeldetag: 08.03.2003
(51) Int. Cl.: F25B 15/02, F25B 49/04

(54) **Absorptionskälteverfahren und Vorrichtung ohne druckausgleichendem Glas**
Absorption refrigeration method and apparatus without gas pressure compensation
Procédé et appareil frigorifique à absorption sans gaz d'équilibrage des pressions

(30) Priorität: 30.04.2002 DE 10219262
(43) Veröffentlichungstag der Anmeldung: 03.12.2003
(73) Patentinhaber: Förster, Hans, Dr.-Ing., 39112 Magdeburg (DE); IBB Ingenieurbüro Bismark GmbH, 39629 Bismark (DE)
(72) Erfinder: Förster, Hans Dr.-Ing., 39112 Magdeburg (DE)
(74) Vertreter: Voigt, Wolf-Rüdiger

(56) Entgegenhaltungen:
- EP-A- 0 757 215
- EP-A- 0 851 190
- DE-A- 10 017 828
- US-A- 4 341 084
- US-A- 4 418 545
- US-A- 4 706 464

## Beschreibung

Die Erfindung betrifft ein Verfahren und eine Einrichtung zur Kälteerzeugung unter 0 °C nach dem Sorptionsprinzip mit einem Lösungsumlauf von zwei ineinander voll löslichen Flüssigkeiten ohne druckausgleichendem Gas. Anwendbar sind die erfindungsgemäßen Absorptionskälteanlagen vorzugsweise für Leistungen im kW-Bereich, in besonderer Gestaltung auch im MW-Bereich, wobei die Heizparameter oberhalb 100 °C liegen müssen.

Absorptionskälteanlagen ohne druckausgleichendem Gas weisen im heißen Teil ein ausgeprägt hohes Druckniveau auf, dass durch die Kondensation des Kältemittels bestimmt wird, und im kalten Teil ein niedriges Druckniveau, das durch die Verdampfungstemperatur des reinen Kältemittels geprägt ist. Die vorgeschlagenen Verbesserungen beziehen sich deshalb sowohl auf den Hochdruck- als auch auf den Niederdruckteil des Verfahrens und seiner Ausrüstung.

Für den Niederdruckteil wird der Stand der Technik anhand DE 19921469 A1 dargestellt. Danach ist ein Verfahren bekannt, bei dem der Verflüssiger und der Verdampfer als Plattenwärmeübertrager ausgeführt ist, wobei der Verdampfer von oben mit Kältemittel beschickt, der entstandene Kältemitteldampf am unteren Ende gemeinsam mit dem nichtverdampfenden Anteil des Kältemittels und einschließlich dem flüssigen wässrigen Entgasungsrest abgezogen wird. Das Zweiphasengemisch aus Kältemitteldampf sowie flüssigem Kältemittel und Wasser wird in den Nachkühler gefördert. Dazu sind Verdampfer, Nachkühler und Absorber in der angegebenen Folge mit natürlichem Gefälle anzuordnen. Im Nachkühler wird nicht nur der Dampf überhitzt, sondern auch ausgekreistes Kältemittel verdampft mit dem Ergebnis, dass nur eine bescheidene Überhitzungstemperatur erreicht wird. Der Kälteinhalt des Kaltdampfes wird also nicht befriedigend genutzt, zumal die Menge an auszukreisender Flüssigkeit bei verschiedener Leistung zuviel Kältemittel enthält, das eigentlich im Verdampfer Kälteleistung abgeben soll. Der Zwang zur Einhaltung eines natürlichen Gefälles zwischen Verdampfer, Nachkühler und Absorber behindert die Bemühungen um Kompaktheit der Anlage. Eine Zweiphasenströmung mit Erosionsgefahr tritt bereits im Nachkühler auf. Die Zuführung dieses Zweiphasengemisches zur armen Lösung vor dem Absorber schließt Maßnahmen für die Feinverteilung der armen Lösung im Absorber praktisch aus.

Die Leistungsregelung der Anlage erfolgt nach DE 19921469 A1 über die Temperaturdifferenz der Überhitzung des Kältemitteldampfes im Verdampfer, wobei über den Lösungsumlauf eingegriffen wird. Eine solche Regelung entzieht dem Verdampfer die natürliche Führungsgröße über das Expansionsventil und verteuert die Regelung.

Die thermodynamische Bewertung, die fehlende Kompaktheit, die Kostenfrage, die aufwendige Regelung, die Störungsmöglichkeiten durch Erosion und die Einschränkungen für die Feinverteilung der armen Lösung führen zur Beurteilung, dass das angegebene Verfahren trotz der Einsparung des Entgasers für kompakte Kleinanlagen nicht geeignet ist.

Ferner ist nach EP 0232746 A2 ein Verfahren und eine Einrichtung für die Gestaltung des Niederdruckteils bekannt, mit dem die Auskreisung des Kältemittels über eine regler-geführte Armatur mit Hilfsenergie erfolgt, wobei als Führungsgröße die minimale Temperaturdifferenz zwischen dem unterkühlten Kältemittel vor der Entspannung in den Verdampfer und dessen Dampftemperatur verwendet wird. Dadurch soll energiesparend die Konzentration des verdampfenden Kältemittelgemisches automatisch eingehalten werden. Nachteilig ist bei diesem Verfahren, dass sowohl die Auskreisung als auch die Entspannung des Kältemittels den Einsatz von Reglern verlangt, die sich gegenseitig beeinflussen und Kosten verursachen, wobei die Auskreisung des Kältemittels Regler mit Hilfsenergie verlangt. Dieser Weg der Regelung von zwei Größen des Niederdruckteils ist wegen der entstehenden Kosten und wegen der technischen Probleme der gegenseitigen Beeinflussung der Führungsgrößen für Absorptionskälteanlagen kleiner Leistung nicht geeignet.

Für den Hochdruckteil des Verfahrens kann der Stand der Technik anhand der Standardwerke beschrieben werden. Lange Zeit bestimmte die Rieseltechnik den Stand der Technik. Nach dem Standardwerk von Niebergall wurden Desorber als stehende kolonnenartige Einrichtungen mit stehenden Austreiberrohren, in denen die reiche Lösung innen als Film von oben nach unten strömt, ausgebildet. Für dampfbeheizte Desorber großer Leistung mit Heizdampf an der Mantelseite ist diese Form der Gestaltung des Hochdruckteils immer noch sinnvoll, wenn man die adiabate Ausführung des Rektifikators mit äußerer Rücklauferzeugung beibehalten will. Vorteilhaft ist die Gegenstromführung des entgasenden Lösungsfilms und der aufsteigenden Dämpfe sowie der geringe Ammoniakinhalt des Desorbers. Bei heißwasserbeheizten Desorbern ist ebenfalls eine vorteilhafte Gegenstromführung zur entgasenden Lösung ausführbar. Nicht ideal realisierbar ist bei dieser Bauart die wünschenswerte Verwendung einer Lösungsrückführung, die den Effekt der verbesserten Energieumwandlung spürbar erhöhen würde. Nachteilig ist auch die vertikale Struktur der Gestaltung von Desorber und Rektifikator, weil dadurch die Kompaktheit der Anlage eingeschränkt und die Kosten erhöht werden.

Deshalb sind seit einiger Zeit liegende Kessel als Desorber üblich, bei denen das Heizmedium durch die Rohre geführt wird. Diese eignen sich gut für die Gestaltung kompakter Einheiten mit ausschließlich horizontal anordenbaren Ausrüstungen. Allerdings ist die Gegenstromführung von Lösung und Heizmedium mit einem überfluteten liegenden Desorber nicht ohne weiteres möglich. Für die Nutzung von Abwärmen mit starker Auskühlung von Abwärmeträgern ist das aber eine unverzichtbare Voraussetzung, weil die Anwendung der Absorptionskältetechnik zunehmend an diese Bedingung geknüpft ist.

Als Wärmeträger für Abwärmen dienen überwiegend flüssige Wärmeträger wie Heißwasser oder organische Flüssigkeiten, deren Wärmeabgabe in einem überfluteten Desorber bei strenger Gegenstromführung erfolgen muß. Gleichzeitig soll die wirtschaftliche und effektive Integration der Lösungsrückführung geklärt werden, die auch dadurch erforderlich wird, dass die kalte reiche Lösung Wärme im Rektifikator aufnimmt.

Der Erfindung liegt die Aufgabe zugrunde, Wege aufzuzeigen, die es ermöglichen, Absorptionskälteanlagen ohne druckausgleichendem Gas für Temperaturen unter 0 °C kompakt und kostengünstig auch für kleine Leistungen im kW-Bereich zu gestalten.

Erfindungsgemäß wird die Aufgabe für den Niederdruck- und den Hochdruckteil durch die Ansprüche 1 und 2 gelöst.

Im Niederdruckteil wird das verflüssigte Kältemittel 1 zuerst im Nachkühler 2 durch Kaltdämpfe 3 aus dem überfluteten Verdampfer 4, anschließend im Entgaser 5 durch ausgekreistes Kältemittel 6 unterkühlt und die hinter dem Entgaser 5 erreichte Temperatur der Unterkühlung als Führungsgröße eines thermostatischen Expansionsventils 7 für die Zuführung von Kältemittel in den Verdampfer 4 verwendet, wobei die vier Prozesseinheiten Nachkühler 2, überfluteter Verdampfer 4, Entgaser 5 und Absorber 9 als horizontale Rohrbündelapparate in einer gemeinsamen Druckhülle 8 integriert und durch Wehre bzw. Fenster miteinander verbunden sind, so dass ausgekreistes Kältemittel über Wehre vom Verdampfer 4 zum Entgaser 5 und der Entgasungsrest 15 zum Lösungssammler 14 geführt und der Lösungsrest in diesen abgetaucht wird, während der im Verdampfer 4 und Entgaser 5 entstehende Kältemitteldampf nach der Überhitzung im Nachkühler 2 vorzugsweise von unten in den Absorber 9 gelangt.

Im Hochdruckteil wird die kalte reiche Lösung 16 nach der Lösungspumpe 17 zur regenerativen Kühlung in den nichtadiabaten Rektifikator 18 geleitet, anschließend zum Temperaturwechsler 19 zum Wärmetausch mit der armen Lösung 20 gebracht und weiter in den Desorber 21 eingespeist, in dem diese zunächst in der Lösungsrückführung 22 und nachfolgend im fremdbeheizten Teil entgast, als regeneratives Heizmedium in die Lösungsrückführung 22 zurückgeführt, dort vorgekühlt und im Temperaturwechsler 19 auf das Temperaturniveau der Absorption unterkühlt wird, wobei der Desorber 21 als liegender überfluteter Apparat mit Längsleitblechen 23 ausgestattet ist, mit denen ein Gegenstrom zwischen dem Wärmeträger 24 und der entgasenden Lösung hergestellt wird und die Lösungsrückführung 22 in einer separaten Flachwanne 25 oberhalb des fremdbeheizten Teils auf den Längsleitblechen 23 angeordnet ist.

Die Erfindung wird anhand von schematischen Zeichnungen erläutert.
Fig. zeigt den Niederdruckteil des erfindungsgemäßen Verfahrens.
Fig. 2 stellt einen Schnitt durch die Niederdruckeinheit mit den integrierten Prozessschritten Verdampfer, Nachkühler, Entgaser und Absorber dar.
Fig. 3 zeigt schematisch das Verfahren im Hochdruckteil mit Desorber, Rektifikator, Temperaturwechsler und Lösungspumpe.
Fig. 4 zeigt Schnitte durch den überfluteten horizontalen Desorber.

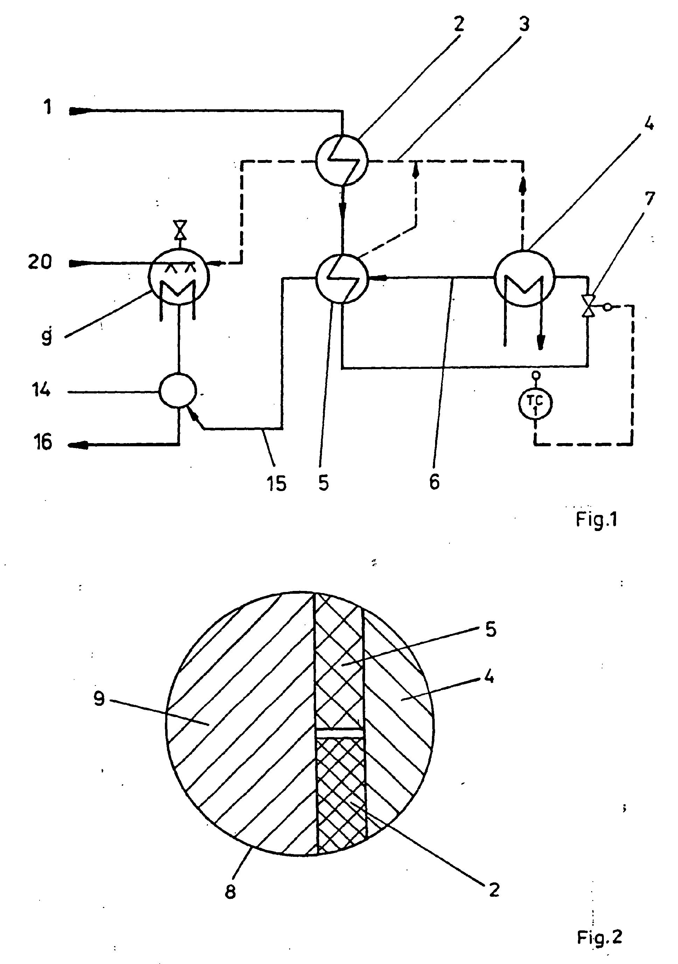

In Fig. 1 wird dargestellt, dass die Auskreisung des Kältemittels durch Überlauf aus dem überfluteten Verdampfer 4 durch Regelung der Kältemittelzufuhr durch das thermostatische Expansionsventil 7 erfolgt. Voraussetzung für die Verwendung eines thermostatischen Expansionsventils, das an sich nur für "trockene" Verdampfer mit Dampfüberhitzung vorgesehen ist, bildet eine starke Unterkühlung des Kältemittels in zwei Schritten, wobei zuerst die Unterkühlung durch die Kaltdämpfe im Nachkühler 2 und die zweite Nachkühlung durch Entgasung des Kältemittels erfolgt. Dadurch wird das Kältemittel so stark unterkühlt, dass es nur noch 5 bis 12 k oberhalb der Verdampfungstemperatur liegt und damit die Größenordnung der Uberhitzungstemperatur bei trockener Verdampfung annimmt. Das ermöglicht die Verwendung üblicher thermostatischer Expansionsventile. Gleichzeitig entfällt die Standregelung im überfluteten Verdampfer 4 und im Entgaser 5, die durch Überlaufwehre ersetzt werden.

Die Ausführung von Überlaufwehren zur Auskreisung von Kältemittel 6 und zur Abnahme des Entgasungsrestes 15 legt eine kompakte Gestaltung in Form horizontaler Strukturen nahe, wobei die geforderte Kompaktheit noch dadurch verbessert wird, dass bei kleinen Leistungen der überflutete Verdampfer 4, der Entgaser 5, der Nachkühler 2 und der Absorber 9 in einer gemeinsamen Druckhülle 8 zusammengefasst sind (Fig. 2), so dass die Überläufe ohne äußere Rohrleitungen erfolgen, wobei der Mittelteil vom Entgaser 5 und ggf. Nachkühler 2 gebildet wird und Kältebrücken zwischen Verdampfer 4 und Absorber 9 durch eine "hängende" Konstruktion des Entgasers 5 zwischen Verdampfer und Absorber minimiert werden. Das geschilderte Prinzip der Regelung und die Verwendung von Wehren und Dampfübertrittsfenstern sind auch für große Leistungen anwendbar, allerdings ist dann eine Zusammenfassung in einer gemeinsamen Druckhülle nicht zwingend erforderlich.

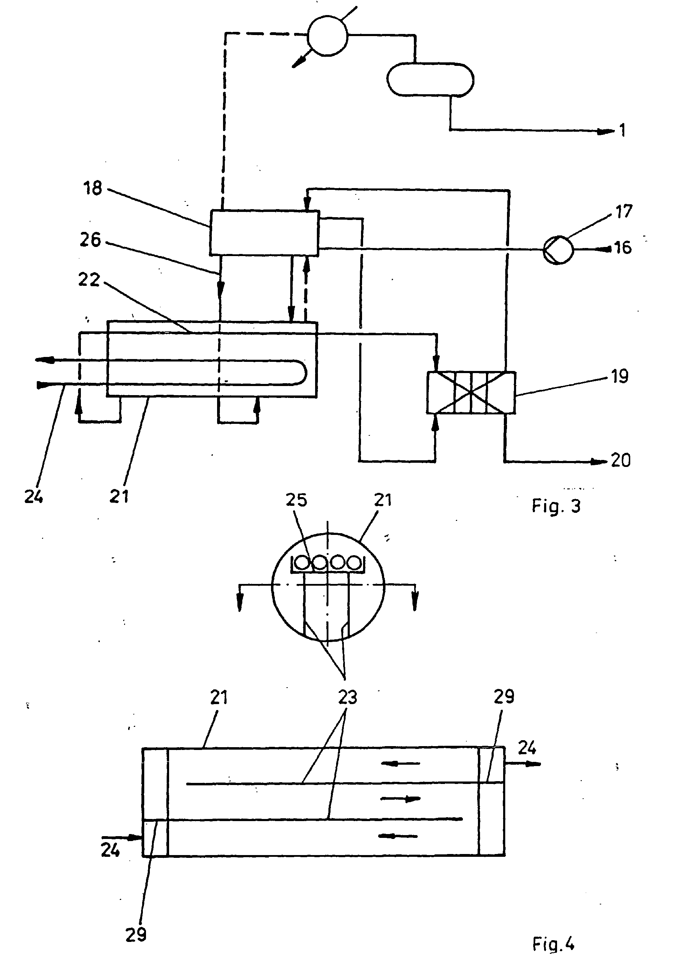

Dem erfindungsgemäßen Verfahren im Hochdruckteil nach Fig. 3 liegt eine zweifache Vorwärmung der reichen Lösung 16 durch den nichtadiabaten Rektifikator 18 und den Temperaturwechsler 19 zugrunde. Die arme Lösung 20 wird analog in zwei Schritten gekühlt, wobei am heißen Ende Wärme an die Lösungsrückführung 22 und anschließend an die reiche Lösung im Temperaturwechsler 19 abgegeben wird. Der Rücklauf 26 aus dem nichtadiabaten Rektifikator 18 wird in den Desorber 21 zurückgeführt und abgetaucht.

Die konstruktive Gestaltung des Desorbers 21 nach Fig. 4 zeigt Längsleitbleche 23, die den Gegenstrom zwischen entgasender Lösung und Wärmeträger 24 herstellen und gleichzeitig die Flachwanne 25 der Lösungsrückführung 22 tragen.

### Liste der verwendeten Bezeichnungen

- 1: verflüssigtes Kältemittel
- 2: Nachkühler
- 3: Kaltdämpfe
- 4: überfluteter Verdampfer
- 5: Entgaser
- 6: ausgekreistes Kältemittel
- 7: thermostatisches Expansionsventil
- 8: Druckhülle
- 9: Absorber
- 10: Übergangszone
- 11: Wehr
- 12: Fenster
- 13: Fenster
- 14: Lösungssammler
- 15: Entgasungsrest
- 16: reiche kalte Lösung
- 17: Lösungspumpe
- 18: gekühlter Rektifikator (nichtadiabater Rektifikator)
- 19: Temperaturwechsler
- 20: arme Lösung
- 21: Desorber
- 22: Lösungsrückführung
- 23: Längsleitbleche
- 24: Wärmeträger
- 25: Flachwanne
- 26: Rücklauf
- 27, 28: Vorkammern
- 29: vertikale Kammerstege

## Patentansprüche

1. Verfahren zur Kälteerzeugung unter Verwendung eines Arbeitsstoffpaares, dessen Komponenten im reinen Zustand Flüssigkeiten mit unterschiedlichen Siedepunkten darstellen, die sowohl im Hochdruck- als auch im Niederdruckteil ohne Verwendung eines druckausgleichenden Gases eingesetzt sind, **gekennzeichnet dadurch, dass** die in den Hochdruckteil eintretende kalte reiche Lösung (16) vollständig und ungeregelt als Kühlmedium in einem horizontalen nicht adiabaten Rektifikator (18) eingesetzt und vorgewärmt wird, danach im Temperaturwechsler (19) durch die arme Lösung weiter Wärme aufnimmt, im Desorber (21) zuerst regenerativ durch die Lösungsrückführung (22) und schließlich im fremdbeheizten Teil des überfluteten Desorbers (21) auf die Konzentration der armen Lösung (20) desorbiert wird, danach zuerst in der Lösungsrückführung (22) und schließlich im Temperaturwechsler (19) Wärme abgibt und dass das in den Niederdruckteil eintretende verflüssigte Kältemittel (1) zuerst im Nachkühler (2) durch Kaltdämpfe (3) aus dem überfluteten Verdampfer (4) und anschließend im Entgaser (5) durch ausgekreistes Kältemittel (6) unterkühlt wird, wobei die hinter dem Entgaser (5) erreichte Temperatur der Unterkühlung des Kältemittels als Führungsgröße für die selbsttätige Zuführung von Kältemittel in den Verdampfer (4) über ein thermostatisches Expansionsventil (7) verwendet wird und vier Prozesseinheiten, nämlich Nachkühler (2), überfluteter Verdampfer (4), Entgaser (5) und Absorber (9) als horizontale Rohrbündelapparate in einer gemeinsamen Druckhülle (8) integriert und miteinander verbunden sind, wodurch das ausgekreiste Kältemittel (6) über Wehre vom Verdampfer (4) zum Entgaser (5) und der Entgasungsrest (15) zum Lösungssammler (14) geführt und der Lösungsmittelrest in diesem abgetaucht wird, während der im Verdampfer (4) und Entgaser (5) entstehende Kältemitteldampf nach der Überhitzung im Nachkühler (2) in den Absorber (9) gelangt.

2. Vorrichtung zur Durchführung des Verfahrens nach Anspruch 1 **dadurch gekennzeichnet, dass** ein Hochdruckteil gegeben ist, bestehend aus einem Desorber (21), einem horizontalen nicht adiabatischen Rektifikator (18) und einem danach angeordneten Temperaturwechsler (19) sowie ein Niederdruckteil, wobei der Verdampfer (4), Absorber (9), Nachkühler (2) und Entgaser (5) in einer gemeinsamen horizontal angeordneten Druckhülle (8) angeordnet sind, wobei die kälteste Zone, gebildet durch Verdampfer (4) und die wärmste Zone, gebildet durch Absorber (9), durch eine dazwischenliegende, den Entgaser (5) und ggf. den Nachkühler (2) enthaltene Übergangszone (10) getrennt sind, der Verdampfer (4) über ein Wehr (11) mit dem Entgaser (5) und über ein Fenster (12) mit dem Nachkühler (2) und der Nachkühler (2) über ein Fenster (13) über eine andere geeignete Verbindung zum Lösungssammler (14) oder mit dem Absorber (9) verbunden ist.

3. Vorrichtung zur Durchführung des Verfahrens nach Anspruch 2 **dadurch gekennzeichnet dass** der an sich bekannte horizontal angeordnete und überflutet arbeitende Desorber (21) durch Längsleitbleche (23) unterteilt ist, die die Flachwanne (25) der Lösungsrückführung (22) tragen und die Vorkammern (27, 28) durch vertikale Stege (29) unterteilt sind.

## Claims

1. Method for the production of cold using a pair of work fluids the components of which, in their pure states, are liquids of different boiling points that are used in both the high-pressure and the low-pressure system without gas pressure compensation, **characterised in that** the rich cold solution (16) flowing into the high-pressure system is completely and in a non-controlled way employed as refrigerating medium in a horizontally arranged, non-adiabatic rectifier (18) where it is pre-heated and then, in the heat exchanger (19), takes up further heat from the weak solution, followed by a desorption process in the desorption unit (21) where the rich solution, in an initial regenerative step through the solution return circuit (22) and finally in the externally fired part of the flooded desorption unit (21), is desorbed down to the weak solution's (20) concentration, then conveys heat initially in the solution return circuit (22) and finally in the heat exchanger (19), and that the liquefied refrigerating medium (1) flowing into the low-pressure system is super-cooled in a first step inside the after-cooler (2) by cold vapours (3) coming from the flooded evaporator (4) and then by out-cycled refrigerating medium (6) inside the degassing unit (5), with the super-cooled refrigerating medium's temperature readings downstream from the degassing unit (5) being used as control input for the automatic admission of refrigerating medium into the evaporator (4) through a thermostatic expansion valve (7), and four process units, i.e., after-cooler (2), flooded evaporator (4), degassing unit (5) and absorber (9) are integrated in a common pressure enclosure (8) and connected to each other, whereby the out-cycled refrigerating medium (6) is routed through gates from the evaporator (4) to the degassing unit (5) and the remnants of the degassing process (15) to the solution header (14), where the solvent residues are submerged, whereas the refrigerant vapours from the evaporator (4) and the degassing unit (5), after being superheated in the after-cooler (2), flow to the absorber (9).

2. Device for the implementation of the method according to claim 1 **characterised in that** there is a high-pressure system comprising a desorption unit (21), a horizontally arranged, non-adiabatic rectifier (18) and a downstream heat exchanger (19), as well as a low-pressure system, with the evaporator (4), the absorber (9), the after-cooler (2) and the degassing unit (5) being housed in a common, horizontally arranged pressure enclosure (8), and where the coldest zone, i.e. the evaporator (4), and the warmest zone, i.e. the absorber (9), are separated by a transition zone (10) put in between with, with the latter comprising the degassing unit (5) and possibly the after-cooler (2), and where connections are made from the evaporator (4) to the degassing unit (5) through a gate (11) and to the after-cooler (2) through a window (12), and from the after-cooler (2) to the solution header (14) or to the absorber (9) through a window (13) or another suitable connector.

3. Device for the implementation of the method according to claim 2 **characterised in that** the generally well known desorption unit (21), arranged in horizontal position and working in flooded condition, is subdivided by lengthwise guide plates (23) which are supporting the flat tray (25) of the solution return circuit (22), and that the antechambers (27, 28) are subdivided by vertical webs (29).

## Revendications

1. Procédé pour la production de froid en utilisant un couple de fluides de travail dont les constituants à l'état pur représentent des liquides aux points d'ébullition différents qui sont utilisés aussi bien dans la partie haute pression que dans la partie basse pression sans l'intervention d'un gaz égalisateur de pression, **caractérisé en ce que** la solution riche froide (16) entrant dans la partie haute pression est appliquée complètement et sans être réglée comme milieu de refroidissement dans un rectifieur (18) horizontal non adiabatique où elle est préchauffée, et ensuite elle absorbe encore plus de chaleur par la solution pauvre (20) dans l'échangeur de température (19), dans le désorbeur (21) elle est désorbée tout d'abord de manière régénératrice par le reflux de la solution (22) et ensuite dans la partie chauffée indépendamment du désorbeur (21) submergé à la concentration de la solution pauvre (20), ensuite elle donne tout d'abord de la chaleur dans le reflux de la solution (22) et ensuite dans l'échangeur de température (19) et que le réfrigérant (1) liquéfié entrant dans la partie basse pression est refroidi d'abord dans le radiateur secondaire (2) par les vapeurs froides (3) de l'évaporateur (4) submergé et ensuite dans le dégazeur (5) par du réfrigérant sorti du cycle (6), la température obtenue derrière le dégazeur (5) du surrefroidissement du réfrigérant étant utilisée comme grandeur de référence pour l'alimentation automatique de réfrigérant dans l'évaporateur (4) par une soupape thermostatique d'expansion (7) et quatre unités de processus, à savoir, le radiateur secondaire (2) l'évaporateur submergé (4), le dégazeur (5) et l'absorbeur (9) comme appareils en faisceaux de tuyaux horizontaux qui sont intégrées et interconnectés dans une enveloppe commune de pression (8), suite à quoi le réfrigérant sorti du cycle (6) passe par des déversoirs de l'évaporateur (4) au dégazeur (5) et le reste du dégazage (15) vers le collecteur de solution (14) et la solution résiduelle qui est plongée dans celui-ci, alors que la vapeur de réfrigérant produite dans l'évaporateur (4) et le dégazeur (5) parvient après le suréchauffement dans le radiateur secondaire (2) et l'absorbeur (9).

2. Dispositif pour la réalisation du processus selon la revendication 1 **caractérisé en ce qu'**il y a une partie haute pression constituée d'un désorbeur (21), d'un rectifieur horizontal non adiabatique (18) et d'un échangeur de température (19) situé en aval, ainsi qu'une partie basse pression, l'évaporateur (4), l'absorbeur (9) le radiateur secondaire (2) et le dégazeur (5) étant disposés ensemble dans une enveloppe de pression (8) horizontale, la zone la plus froide formée par l'évaporateur (4) et la zone la plus chaude formée par l'absorbeur (9) étant séparées par une zone de transition (10) intercalée contenant le dégazeur (5) et éventuellement le radiateur secondaire (2), l'évaporateur étant relié (4) par un déversoir (11) au dégazeur (5) et par une fenêtre (12) au radiateur secondaire (2) et le radiateur secondaire (2) par une fenêtre (13) au moyen d'une autre liaison appropriée au collecteur de solution (14) ou à l'absorbeur (9).

3. Dispositif pour la réalisation du processus selon la revendication 2 **caractérisé en ce que** le désorbeur (21) disposé horizontalement et travaillant en situation submergée est divisé par des déflecteurs (23) longitudinaux, portant le bac plat (25) du reflux de la solution (22) et que les chambres en amont (27, 28) sont divisées par des nervures (29) verticales.
